# EUROPEAN PATENT SPECIFICATION

(11) **EP 3 524 846 B1**
(45) Date of publication and mention of the grant of the patent: **23.09.2020**
(21) Application number: 18156104.4
(22) Date of filing: 09.02.2018
(51) Int. Cl.: F16F 7/108, F16F 1/373

(54) **A FREQUENCY TUNED DAMPER ASSEMBLY, AND A METHOD FOR ASSEMBLING SUCH A DAMPER ASSEMBLY**
FREQUENZABGESTIMMTE DÄMPFERANORDNUNG UND VERFAHREN ZUR MONTAGE SOLCH EINER DÄMPFERANORDNUNG
ENSEMBLE AMORTISSEUR ACCORDÉ EN FRÉQUENCE ET PROCÉDÉ D'ASSEMBLAGE D'UN TEL ENSEMBLE AMORTISSEUR

(43) Date of publication of application: 14.08.2019
(73) Proprietor: Vibracoustic Forsheda AB, 331 71 Forsheda (SE)
(72) Inventor: Gustafsson, Rickard, 331 94 Värnamo (SE)
(74) Representative: AWA Sweden AB

(56) References cited:
- WO-A1-01/92752
- WO-A1-2008/127157
- JP-A- H0 337 447
- JP-A- H1 030 677
- JP-A- H10 252 819
- JP-A- 2008 138 814
- US-A1- 2005 066 767
- US-B1- 6 450 473

## Description

### TECHNICAL FIELD

The present disclosure relates to the field of frequency tuned dampers, also known as tuned mass dampers or tuned vibration dampers. Such dampers can be mounted in structures, for instance in motor vehicles, to reduce the amplitude of vibrations in the structure. The present inventive concept is related to a tuned damper assembly, and to a method for assembling such a damper assembly.

### BACKGROUND

The function of frequency tuned vibration dampers is based on a dampened spring-mass system which counteracts and reduces vibrations in a structure or surface to which the damper is connected. Such vibrations may be in directions WO 01/92752 A1, WO 2013/167524 A1, and WO 2008/127157 A1 disclose examples of frequency tuned vibration dampers. Document JP H10 252819 A, which is considered to be the closest prior art to the invention, also discloses a frequency tuned vibration damper.

A known type of a frequency tuned damper comprises a longitudinal vibration body or mass element which at two opposite ends is elastically supported in a console or fixture via two elastic damper elements. The mass element is typically made at least in part from metal, such as steel. The elastic damper elements are typically made from an elastic material comprising rubber, such as silicon rubber. The mass element and the two elastic damper elements are together frequency tuned to one or more resonance frequencies matching the frequency or frequencies of the vibrating structure. During the damping operation, the elastically supported mass element will vibrate out or phase with the vibrations of the structure, thereby reducing or absorbing the vibrations thereof.

Although such known vibration dampers are efficient in their damping operation, they still present some drawbacks relating to the cost and time for manufacturing and assembling

### SUMMARY OF INVENTION

In the light of the above, it is an object of the present inventive concept to provide a frequency tuned damper assembly, and a method for assembling a frequency tuned damper assembly, presenting advantages in terms of time and cost for manufacturing and assembling. According to a first aspect of the inventive concept, there is provided a frequency tuned damper assembly for dampening vibrations of a vibrating structure, said damper assembly comprising:
a damper having a longitudinal direction and including at least two elastic damper elements and at least one mass element, said mass element extending in the longitudinal direction between two opposite ends thereof and being elastically supported at each one of said opposite ends via an associated one of said two elastic damper elements, and said mass element and said two elastic damper elements together forming a spring-mass system which is frequency tuned to vibrations of the vibrating structure; and
a console comprising two support portions, which are mutually spaced in the longitudinal direction and which support the damper therebetween;
wherein at least a first damper element of the two elastic damper elements forms part of a first snap-lock mechanism and is in a biased state by being elastically compressed in the longitudinal direction for maintaining the first snap-lock mechanism in a locked state in which the mass element is held in a locked mounted position, said first snap-lock mechanism in its locked state being arranged to prevent the mass element from being disengaged from the console in a transverse direction relative to the longitudinal direction; and
wherein said first snap-lock mechanism for assembling the damper assembly is arranged to allow, by an elastic compression in the longitudinal direction of the first damper element, the mass element to be brought into its locked mounted position

According to a second aspect of the inventive concept, there is provided a method for assembling a frequency tuned damper assembly, said method comprising:
bringing a mass element into a mounted position between two supporting portions of a console by moving at least one of the mass element and the console, in a transverse direction relative to a longitudinal direction of the mass element, towards the other one of the mass element and the console,
   wherein the mass element in its mounted position is elastically supported by the support portions via two elastic damper element which are arranged at opposite ends of the mass element; and wherein at least a first elastic damper element of said two elastic damper elements forms part of a first snap lock mechanism and is being elastically compressed in the longitudinal direction as a result of bringing the mass element into said mounted position; and
as a result of bringing the mass element into its mounted position, snap-locking at least a first end of said two opposite ends of the mass element in the transverse direction by means of said first snap-lock mechanism, in which the first damper element operates to bring the first snap-lock mechanism into a locked state, wherein in said locked state the first elastic damper element is in a biased state by being elastically compressed in the longitudinal direction to maintain the first snap-lock mechanism it its locked state

Preferred embodiments of the inventive concept are set out in the dependent claims.

The inventive concept presents at least the following advantages:
The inventive concept makes it possible to manufacture and assemble a damper assembly of the type described above to a lower cost and in a shorter time. Since the elastic property of the damper element is used for dual purposes - frequency damping and snap-locking - the number of components in the assembly can be reduced.

Also, by arranging at least one snap-lock mechanism for automatically locking the mass element in the transverse direction during insertion operation, the mass element may be mounted and locked in the console by one operation only.

The inventive concept also makes it possible to keep the mass element securely in place in its mounted position - both in the longitudinal direction and in the transverse direction - solely by the action of the snap-lock mechanism(s).

A further advantage of the inventive concept relates to the actual vibration damping function of the damper. Since at least one of the two damper elements is held in a biased state, by being elastically compressed in the longitudinal direction for maintaining the first snap-lock mechanism in the locked state, a pre-compression is present making it possible to avoid or reduce problems related to built-in tensions in the elastic elements resulting from shrinkage of the elastic material.

In the following description of certain embodiments of the inventive concept, all statements referring to a first side of the assembly only, such as the first damper element, the first snap-lock mechanism, etc., applies also to the second opposite side of the damper assembly, since it is possible to implement the inventive concept at one side only or at both sides. Thus, the two opposite sides of the damper assembly may be substantially identical in terms of both structure and function.

In some embodiments, the first damper element comprises an elastic component made from an elastic material and a locking component made from a more rigid material than the elastic material. The elastic component forms part of the spring-mass system and is elastically compressed in the longitudinal direction in the mounted position of the mass element. The more rigid locking component forms a first locking part of the first snap-lock mechanism and is maintained by the longitudinally compressed elastic component in a locked engagement with a second locking part of the first snap-lock mechanism.

In such embodiments, the damper element may comprise more than one elastic component and also more than one rigid locking component.

One of the first and the second locking parts may be a female-type locking part and the other may be a male-type locking part extending at least partly in the longitudinal direction. The locking parts may be arranged to snap into a locking engagement with each other at the moment when the mass element reaches its correct mounted position in the console during the assembly process.

In preferred embodiments, the first snap-lock mechanism is arranged at an interface between the first elastic damper element and an associated first support portion of said two support portions of the console. The rigid locking component of the first damper element is facing the associated first support portion of the console during the assembly. The associated first support portion of the console is provided with the second locking part of the first snap-lock mechanism.

In such embodiments, the mass element and the two damper elements may be arranged to be held together as a damper unit during the assembly process. Thus, the damper elements may be pre-mounted on or pre-engaged with the mass element to form a damper unit before the insertion process, and this damper unit comprising the damper elements and the mass element may thereafter be inserted into and snap-locked in the console, at one or both ends of the damper unit.

In some embodiments, the elastic properties of the elastic damper element may be used not only for the two functions described above - frequency dampening and snap-locking - but also for mechanically connecting the damper elements both in the longitudinal direction and the transverse direction. In such preferred, the elastic component of the first damper element may comprise at least one angled engagement portion extending at an angle in relation to the longitudinal direction. The angle may typically be between 0 and 90 degrees, for example about 45 degrees. In the assembled damper assembly, the angled engagement portion of the elastic component may be located at an interface between the first elastic damper element and the mass element. The angled engagement portion is arranged to convert part of a longitudinal force generated by the longitudinally compressed damper component into a transverse engagement force. The angled engagement portion may engage directly with the mass element, or with an intermediary connector element as will be described below.

An advantage of this solution of engaging the elastic damper element with the mass element, or optionally with an intermediate connector element as described below, is that the use of vulcanization and/or adhesives may be completely avoided, as well as the need for any screw connections. The biasing forces acting in the longitudinal direction on the elastic damper elements are at least partly converted into transverse engagement forces for establishing the required engagement. A special advantage of this solution is that this engagement may be automatically achieved as a direct and automatic result of mounting the damper in the console, creating the biasing forces in the longitudinal direction, thereby further reducing manufacturing time.

A further advantage of this solution is that the resonance frequency or frequencies may be tuned by changing one or more parameters of the one or more angled portions of the elastic component, such as the angle, the wall thickness, the longitudinal extension, number of grooves or openings in the material, etc.

In some embodiments, the first snap-lock mechanism is provided with co-operating guide surfaces which are being structured and arranged, when assembling the damper assembly:
to provide a gradually increasing compression of the first elastic damper element in the longitudinal direction for allowing the mass element to be brought into its mounted position, and
to subsequently allow the first elastic damper element to expand to its biased state for bringing the first snap-lock mechanism to its locked state.

In such embodiments, the first elastic damper element will present different degrees of compression in the longitudinal direction during and after the assembly process. Before the assembly is initiated, the damper element is un-compressed. During the insertion movement of the mass element into the console, the damper element will be gradually compressed in response to said guide surfaces sliding in relation to each other, up to the moment when the correct mounted position has been reached. At that moment, the snap-lock mechanism is activated under the action of the compressed damper element which is now allowed to expand to a less compressed but still biased state in which the damper element maintains the first snap-lock mechanism in its locked state.

In some embodiments, the locking component is made at least partly from metal. In other embodiments, the elastic component and the more rigid locking component of the damper element are in the form of a 2K element made by a 2K process. As an example, the elastic component may be made from rubber, such as silicone rubber, and the other more rigid component may be made from a synthetic resin, such as a thermoplastic or thermosetting material.

Since the elastic damper element is held in a biased state in the final assembly, it may also be possible in some embodiments to design a damper element in which the locking component and the elastic component thereof are simply held together but not bonded together during the insertion process. In the final assembly, the elastic force generated by the longitudinally compressed damper element may be sufficient to keep the two components in their correct assembled positions.

In preferred embodiments of the inventive concept, the damper assembly is provided with a snap-lock mechanism at both ends, whereby both damper elements are used for snap-locking purposes as described above for the first damper element. In such embodiments, the transverse insertion direction may be substantially perpendicular to the longitudinal direction, and the two ends of the damper may be locked essentially at the same time in the console during the insertion process.

In other embodiments including a snap-lock mechanism at one end only, the transverse insertion direction may be at a different and varying angle. One end of the mass element may be first inserted into the console at an angle and held against one of the support portions of the console. Thereafter, the mass element is angled into its final mounted position between the support portions in which it is snap-locked at the other support portion of the console and merely held locked in the transverse direction at the first-mentioned support portion.

In some embodiments, the assembly further comprises two intermediate connector elements, each connector element having a first engagement side in direct engagement with an associated one of the two opposite ends of the mass element, and an opposite second engagement side in direct engagement with an associated one of the two elastic damper elements. Such intermediate connector elements may as an example be made from a material comprising a synthetic resin, such as thermoplastic materials or thermosetting materials. In preferred embodiments, each connector element presents on its first engagement side a mass-engaging sleeve into which an associated end of the mass element is inserted with a press-fit engagement.

The use of such intermediate connector elements makes it possible to avoid or at least substantially reduce the manufacturing time and cost for cleaning and blasting the mass elements made from metal. Metal mass elements with an untreated and rougher surface may be used. Untreated raw steel material may be cut to suitable lengths and thereafter be used directly in the assembly with no or only a limited surface treatment. The intermediate connector elements may be manufactured to a low cost from any suitable material, e.g. synthetic resin, such as thermoplastic materials or thermosetting materials. During the manufacturing process, the connector elements may be quickly and easily attached to the ends of the mass element by press-fitting, without any need for additional connection means between the metal surface and the connector elements, such as adhesives or screws, and without any need for forming threaded screw holes in the ends of the metal mass elements. In a manufacturing process involving the making of dampers tuned to different resonance frequencies, mass elements of different length but with the same cross section may be used and connected to one standard-type of connector element.

### BRIEF DESCRIPTION OF THE DRAWINGS

The inventive concept, some non-limiting preferred embodiments, and further advantages of the inventive concept will now be described with reference to the drawings in which:
- Figs 1A to 1C: illustrate a first embodiment of a frequency tuned damper.
- Figs 2A and 2B: illustrate an elastic damper element.
- Figs 3A to 3C: illustrate a connector element.
- Figs 4A to 4C: illustrate a console.
- Figs 5A to 5C: illustrate assembly steps of the first embodiment.
- Figs 6A and 6B: are sectional views of the assembly steps.
- Figs 7A to 7D: illustrate the operation of a snap-lock mechanism in the first embodiment.
- Figs 8A and 8B: illustrate a deflection-limiting mechanism.
- Fig. 9: illustrates a second embodiment of a frequency tuned damper.
- Figs 10A to 10C: illustrate the operation of a snap-lock mechanism in the second embodiment.
- Figs 11A to 11C: illustrate assembly steps of the second embodiment.
- Fig. 12: illustrates an alternative embodiment with no deflection-limiting mechanism.
- Fig. 13: illustrates an alternative embodiment of attaching a damper element to the mass element.

### DETAILED DESCRIPTION OF PREFERRED EMBODIMENTS

The present inventive concept relates in general to frequency tuned dampers. Such dampers may be used to dampen vibrations in a vibrating surface or structure, such as a vibrating component in the body of a motor vehicle. The damper comprises a mass acting as a vibration body, and two elastic damper elements. The mass element and the two elastic damper elements together provide a dampened spring-mass system, and may be connected to the vibrating surface of a structure by means of a console. The console may be attached to the vibrating structure or optionally be an integral part thereof.

The weight of the mass, and the stiffness and damping of the elastic damper elements are selected to provide a damping effect on the vibrating structure, which can be expected to vibrate at one or more predetermined target frequencies. When the vibrating structure vibrates at a target frequency, the mass or vibration body is caused to oscillate/resonate at the same frequency as the structure but out of phase, such that the vibration of the structure is substantially dampened. The vibration body may vibrate with an amplitude substantially greater than the vibration amplitude of the vibrating structure.

### 1^{st} embodiment

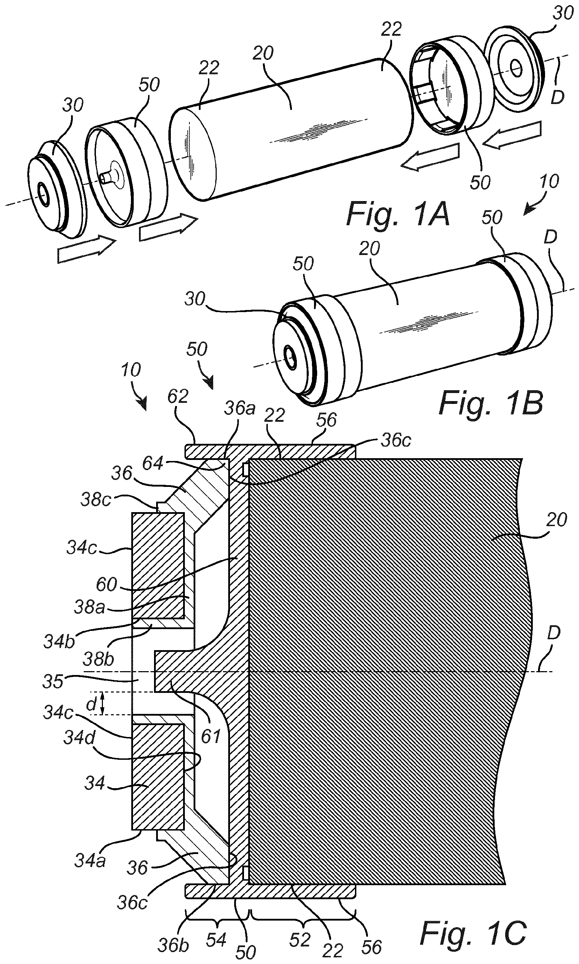

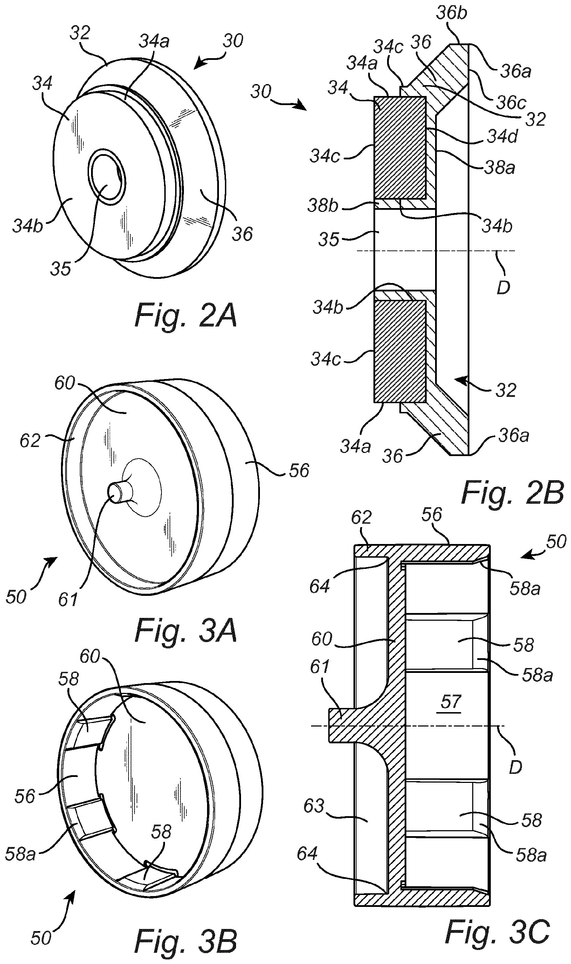

Figs 1A to 1C illustrate a first embodiment of a frequency tuned damper 10. As a non-limiting example, the damper 10 may be used as a tailgate damper in a vehicle. The main components of the damper 10 include a rod-shaped vibration body or mass element 20, two at elastic damper elements 30, and two connector elements 50. The line D represents a longitudinal direction of the damper 10, in this case a line of rotational symmetry. Fig 1A is an exploded perspective view of the non-assembled damper 10, Fig. 1B is a perspective view of the assembled damper 10, and Fig. 1C is a sectional view of one end of the assembled damper 10. An elastic element 30 is illustrated in detail in Figs 2A and 2B, and a connector element 50 is illustrated in detail in Figs 3A to 3C.

In Fig. 1A, arrows illustrate how each connector element 50 is arranged to be brought into engagement with an associated end 22 of the mass element 20, and how each elastic damper element 30 is arranged to be brought into engagement with an associated connector element 50.

In the illustrated embodiment in Fig. 1A to 1C, each one of the elements 20, 30 and 50 is circularly symmetrical in relation to the line D. In other embodiments, as in the second and third embodiments described below, these elements may have a non-circular configuration, for instance a rectangular cross section.

As shown in Figs 2A and 2B, in this embodiment the elastic damper element 30 is a two-component element, comprising an elastic component 32 and a more rigid component 34. The elastic component 32 forms the elastic part of the frequency tuned spring-mass system and may typically be made of rubber, such as silicon rubber. The rigid component 34 is typically non-elastic and made of a more rigid material, such as metal or a synthetic resin. The rigid component 34 forms a first locking part of a snap-lock mechanism and is arranged to co-operate with a second locking part of the snap-lock mechanism for mounting and locking the damper 10 in a console as will be described in detail below.

When the damper 10 is to be assembled according to Figs 1A and 1B, the elastic component 32 and the rigid component 34 are preferably already united into one unit or sub-assembly forming the elastic damper element 30. According to one alternative, the elastic component 32 may be molded directly onto the rigid component 34. In some embodiments, the elastic component 32 and the rigid component 34 may be manufactured as one integral unit in a 2K process.

In an alternative embodiment, the two components 32 and 34 are first formed separately and then united in a suitable manner, for instance by adhesive and/or by forming the elastic component 32 with attachment means for mechanically engaging the rigid component 34. As an example, the elastic material may be attached to the rigid component 34 by forming through-holes in the rigid component 34 and molding the elastic material into such holes.

In the illustrated embodiment, the rigid mounting component 34 of the damper element 30 has the form of a mounting ring 34 made of metal or any other suitable material which preferably is more rigid or stiff than the material used for the elastic component 32. The mounting ring 34 has a radially outer peripheral engagement surface 34a, a radially inner surface 34b forming a central opening 35 of the mounting ring 34, an axially outer engagement surface 34c facing away from the elastic component 32, and an axially inner surface 34d facing towards the elastic component 32.

The elastic component 32 has at least one angled part 36 to be brought into engagement with the associated connector element 50. In this embodiment, the angled part is in the form of a frusto-conical skirt 36 having a wide end 36a, which faces towards the connector element 50 and which presents two perpendicular engagement surfaces: a radially outer engagement surface 36b and an axially inner engagement surface 36c facing towards the connector element 50. The elastic component 32 further comprises a transversally extending portion 38a covering the axially inner surface 34d of the mounting ring 34, a radially inner tubular portion 38b covering the inner peripheral surface 34b of the mounting ring 34, and a smaller radially outer portion 38c covering a part of the outer peripheral mounting surface 34a of the mounting ring 34. The three parts 38a, 38b and 38c of the elastic component 32 forms a mounting cavity for the mounting ring 34 and may be molded around the mounting ring 34 and/or may be attached to the mounting ring 34 via a suitable adhesive or via vulcanization.

Figs 3A to 3C illustrate a non-limiting embodiment of a connector element 50 for use in the damper 10. The connector element 50 is preferably made from a more rigid material than the elastic component 32, but may preferably also present some limited flexibility for the press-fit engagement with the mass element 20. Preferred materials may comprise synthetic resins, such as thermoplastic materials or thermosetting materials. Each connector element 50 may preferably be made as one integral component as in the illustrated embodiment, but it is also possible to design a connector element from different parts, optionally from different materials.

As shown in Figs. 1C and 3C, the connector element 50 has a first engagement side 52 facing towards the mass element 20 and a second engagement side 54 facing towards the associated elastic damper element 30. The first engagement side 52 is arranged to be in engagement with the mass element 20, whereas the opposite second side 54 of the connector element 50 is arranged to be in engagement with the associated damper element 30. Thereby, each connector element 50 will act as an intermediate connector element 30 between the mass element 30 and the associated damper element 30. This arrangement thus avoids the need for attaching the silicon rubber directly to the mass element 20. It also opens up for many possible ways of designing the engagement between the second engagement side 54 and the elastic damper element 30.

Each connector element 50 has on its first engagement side 52 a cylindrical mass-engaging sleeve 56 forming a mass-receiving cavity 57 into which an associated end 22 the mass element 20 is to be inserted with a press-fit engagement. In this embodiment, the inside of the sleeve 56 is provided with a plurality of press-fit tabs 58 mutually spaced in the circumferential direction about the axis D. Each press-fit tab 58 has a bevelled outer end forming a guide surface 58a for the end 22 of the mass element 20. The radially inner surfaces of the press-fit tabs 58 together form a press-fit surface the diameter of which substantially corresponds to, but is somewhat smaller than the outer diameter of the mass element 20. Thereby, the first engagement side 52 of the connector element 50 may be brought into direct engagement with an associated end 22 of the mass element 20 by press-fitting the engagement sleeve 56 over the associated end 22.

Each connector element 50 further comprises an intermediate wall 60 which in this embodiment is integrally formed with the mass-engaging sleeve 56, and which extends transversally to the longitudinal direction D between the associated end 22 of the mass element 20 and the associated elastic damper element 30. In this embodiment, the periphery of the intermediate wall 60 corresponds essentially to the cross section of the mass element 20. In the final engagement position shown in Fig. 1C, when the connector element 50 has been press-fitted over the end 22 of the mass element 20, the end 22 of the mass element 20 will be in contact with the intermediate wall 60.

Each connector element 50 further comprises a deflection limiter 61, which in this embodiment is integrally formed with the wall 60 and extends in a direction towards the elastic damper element 30 coaxially with the centre line D on the second engagement side 54 of the connector element 50.

On its second engagement side 54, each connector element 50 comprises a cylindrical second sleeve 62 forming a second cavity 63 for receiving at least a part of the associated elastic damper element 30. Reference numeral 64 indicates a circumferentially extending inner corner area between the wall 60 and the second sleeve 62.

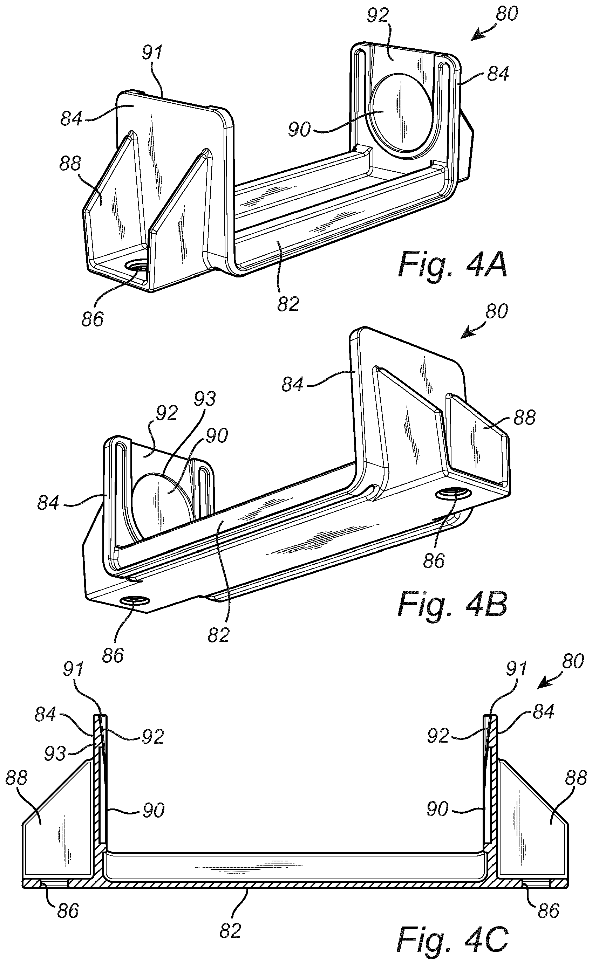

The assembled damper 10 shown in Fig. 1B may be attached to a vibrating surface or structure (not shown) via a supporting console 80 as illustrated in Figs 4A to 4C. The console 80 is essentially U-shaped and comprises a base 82 and two support portions 84 for supporting the damper 10 therebetween. The base 82 is provided with mounting holes 86 for mounting the console 80 to the vibrating structure. In other embodiments, the console or at least the supporting portions 84 may be integrally formed with the vibrating structure, such as a car body. The vibrations to be dampened may typically be directed both in transverse directions in relation to the longitudinal direction D, as well as in the longitudinal direction D. The console 80 may be made from any suitable material, such as metal or a relatively rigid plastic material, and may preferably be made in one integral piece.

Stiffeners 88 are arranged between each support portion 84 and the base 82 for preventing unwanted outward flexing of the support portions 84 when the damper 10 is mounted in the console 80. A damper-receiving mounting recess or cavity 90 is formed in each support portion 84 at the inside thereof. In the preferred embodiment, the shape of the mounting cavities 90 corresponds to the shape of the axially outer engagement surface 34c of the mounting ring 34 so that the mounting ring 34 may be received and locked in the mounting cavity 90 with only a little clearance. The mounting cavity 90 forms the second locking part of the above-mentioned snap-lock mechanism.

As shown in Fig. 4A, the upper side of each support portion 84 has a recess 91 for receiving a mounting ring 34. Each recess 91 continues into a bevelled guide surface 92 extending to the mounting cavity 91. The two bevelled guide surfaces 92 are arranged at a mutual distance which decreases downward towards the mounting cavity 90. At the location where the bevelled guide surface 92 meets the mounting cavity 90, the inside of the support portion 82 presents a step 93, i.e. a sudden decrease in wall thickness.

The manufacture and the assembly of the damper 10, and the subsequent mounting of the assembled damper 10 in the console 80 for forming a final damper assembly 1 will now be described with reference to Figs 1A to 1C, 5A to 5C, 6A and 6B, and 7A to 7D. Before the assembly is initiated, the mass element 20 and the two-component elastic damper elements 30 are manufactured. The two-component elastic damper elements 30 are manufactured as described above. The mass element 20 may preferably be cut from a longitudinal metal body having a substantial uniform cross-section corresponding to the cavities 57 of the connector elements 50. The length of the mass element 20 is cut to a suitable tuning mass/length, and a corresponding console size is selected. An advantage of using the intermediate connector elements 50 is that no or only a limited treatment of the mass element 20 is needed. Especially, blasting will not be needed since the silicon rubber does not have to be bonded to the mass element 20.

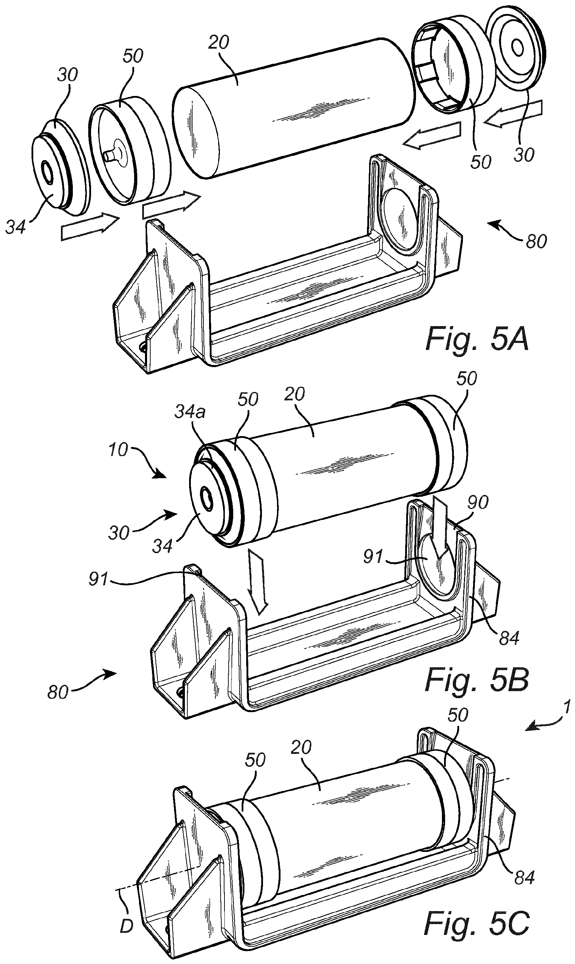

As a first assembly step, the connector elements 50 may be press-fitted onto the ends 22 of the mass element 20, as shown in Figs 1A and 1B, and 5A and 5B. The mass-engagement sleeve 56 is guided over the associated end 22 of the mass element 20 by the bevelled surfaces 58a of the press-fit tabs 58, and the end 22 is brought into engagement with the wall 60 of the connector element 50.

As a second assembly step, each elastic damper element 30 is inserted into the second inner cavity 63 of its associated connector element 50. More specifically, the frusto-conical skirt 36 of the elastic component 32 is received in the inner cavity 63 as shown in Fig. 1C such that the wide end 36a of the frusto-conical skirt 36 is brought into contact with the inner corner area 64 of the cavity 63. In this position, the radially outer engagement surface 36b of the elastic component 32 is facing the inside of the second sleeve 62, and the axially inner engagement surface 36c of the elastic component 32 is facing the intermediate wall 60. In this position, as shown in Fig. 1C, the deflection limiter 61 of the connector element 60 is received in the central opening 35 of the mounting ring 34, with a radial distance d between the deflection limiter 61 and the tubular portion 38b of the elastic component 32.

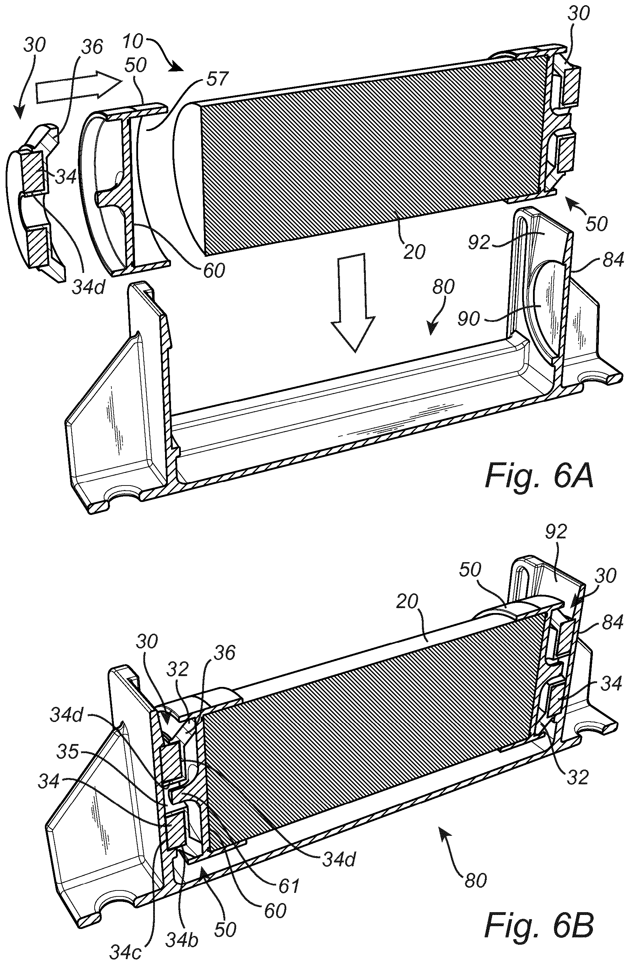

The damper 10 is now assembled as shown in Fig. 1B and is ready for mounting in the console 80. Optionally, the first assembly step and the second assembly step above may be performed in reverse order. The console mounting procedure is illustrated in Figs 5B and 5C, and Figs 6A and 6B. The damper 10 is positioned in relation to the console 80 such that the mounting rings 34 are aligned with the recesses 91 in the support portions 84. Next, the damper 10 is forced by a single transverse movement in relation to the longitudinal direction D into the console 80 to its mounted position in Figs 5C and 6B. Thereby, each mounting ring 34 is received and snap-locked in an associated one of the mounting cavities 90. In the resulting damper assembly 1, each end 22 of the mass element 20 is elastically supported by an associated support portion 84 of the console 80 via an elastic damper element 30 and an intermediate connector element 50. All of the elements 20, 30 and 50 forming the damper 10 are "locked" to each other both in the longitudinal direction and the transverse direction, preventing the damper 10 from being disassembled and preventing the damper 10 from being disconnected from the console 80.

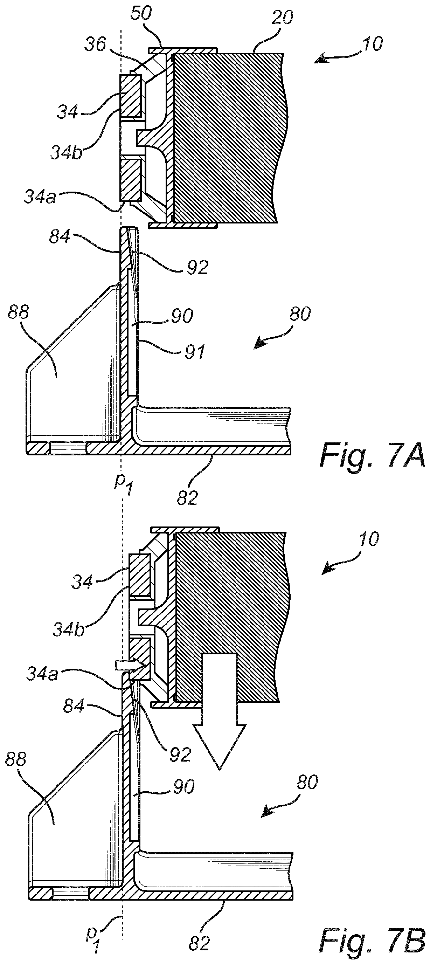

Figs 7A to 7D illustrate in more detail the operation of the snap-lock mechanism for mounting and locking the damper 10 in the console 80.

In Fig. 7A, the damper 10 is illustrated in its state before the insertion is initiated. In this state, the elastic component 36 is un-compressed and the mounting ring 34 is in a longitudinal position p1.

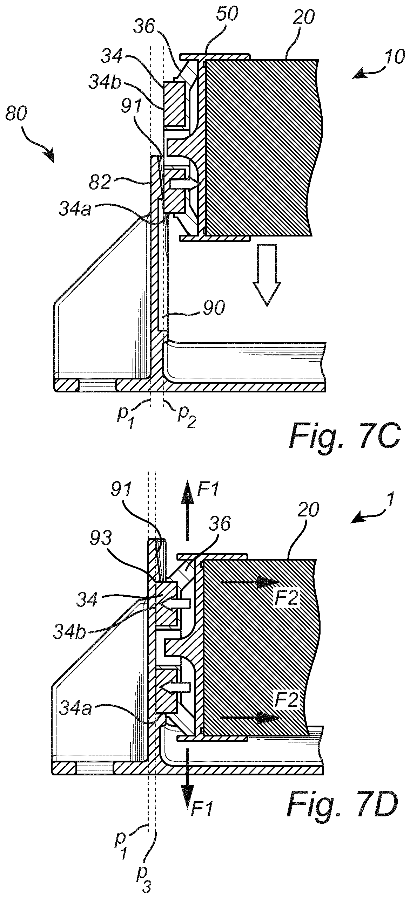

In Fig. 7B, the transverse insertion of the damper 10 into the console 80 has been initiated. Each mounting ring 34 is brought into engagement with the associated bevelled guide surface 92 of the console 80. Due to the elastic properties of the elastic skirt 36, the mounting ring 34 is gradually moved axially towards the connector element 50 and the mass element 20 during the insertion phase. The mounting rings 34 are thus gradually forced axially towards each other by the bevelled guide surfaces 92, as indicated by arrows in Figs 7B and 7C. During this operation and also in the final mounted assembly, the stiffeners 88 prevent unwanted outward bending of the support portions 82.

In Fig. 7C, the insertion phase has reached a point where the mounting ring 34 has passed over the step 93 of the support portion 82 and the elastic skirt 36 thereby has been compressed to a "maximum" level as indicated by a position p2 in Fig. 7C.

In Fig. 7D, the insertion phase has reached a point where the mass element 20 has been brought into its final mounted position in the console 80. When this insertion position is reached, the snap-lock mechanism is activated under the action of the compressed elastic skirt 36. When the whole mounting ring 34 has passed over the step 93 it will click or snap, under the influence of the compressed elastic skirt 36, into the mounting cavity 91 of the console 80 as indicated by arrows in Fig. 7D. The snap-lock mechanism is now in its locked state in which the mounting ring 34 is in a locking engagement with the mounting cavity 91, preventing the mass element 20 from being disengaged from the console 80 in the transverse direction. As shown in Fig. 7D, the mounting ring 34 will now assume an intermediary position p3 in which the elastic skirt 36 is compressed to a less degree but still biased to maintain the snap-lock mechanism in its locked state.

The forced axial displacement of the mounting rings 34 which occurs during the insertion phase and remains to a certain degree also in the final mounted position not only allows the mounting rings 34 to reach their locked positions in the mounting cavities 91. The axial displacement of the mounting rings 34 also results in that the elastic skirt 36 is maintained in a compressed and/or deformed state, creating radial and axial biasing forces F1, F2 between the wide end 36a of the skirt 36 and the second engagement side 54 of the connector element 50, as indicated with arrows in Fig. 7D.

The elastically compression in the longitudinal direction of the damper element 30 may in this embodiment involve mainly a change of shape of the angled portion 36 (shear forces) as illustrated in Figs 7A to 7D, but optionally also some compression (compression forces) of the elastic material as such.

In the assembled damper 1, the mounting ring 34 will preferably not return fully to its original state in Fig. 7A but will preferably be held biased axially against the mounting cavity 91 under the influence of the elastic skirt 36. As a result, the damper 10 will be held firmly in place in the console 80, the snap-lock mechanism will be held in its locked state, and biasing forces F1 and F2 indicated by arrows in Fig. 7D will create an engagement between elastic damper element 30 and the connector element 50. Specifically, the radially outer engagement surface 36b will be pressed radially outwards into engagement with the inside of the second sleeve 62, and the axially inner engagement surface 36c will be pressed axially into engagement with the wall 62. As a result, each elastic damper element 30 may be firmly engaged with the associated connector element 50, especially without any other means, such as adhesives or vulcanization. It may also be noted that this engagement may be achieved as a direct result of inserting the damper 10 into the console 80, thereby avoiding time and cost for attaching the elastic material to the connector element 50 in some other way before inserting the damper 10 into the console 80.

It will be realized from the above that the elastic properties of the elastic damper element 30 is advantageously used for several purposes or functions in the illustrated embodiment:
The first function is the conventional function of acting as a dampened spring element in the frequency tuned damper.
The second function is to form part of a snap-lock mechanism as described with reference to Figs 7A to 7D, securely locking the damper 10 to the console 80 without the need for any further elements or operations for locking the damper 10 to the console 80.
The third function is to establish an engagement with the connector element 50 due to the angled portion 36 and the biasing forces F1, F2 in the mounted assembly.

During normal damping operation of the damper 10, the damper 10 may be arranged to dampen vibrations of the vibrating structure directed transversely to the longitudinal axis D. During such normal operation, the mass element 20 will vibrate slightly in the transverse direction, involving a slight deflection back and forth of the elastic skirt 36. The distance d in Fig. 1C in the deflection limiting mechanism formed by the deflection limiter 61 and the central opening 35 is preferably selected sufficiently large to prevent any deflection limitation during such normal damping operation. In other words, during normal damping operation, the distance d will be greater than zero.

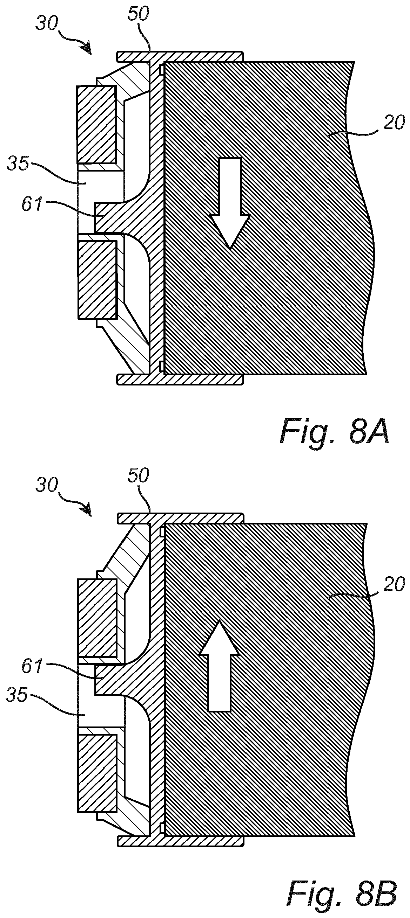

Figs 8A and 8B schematically illustrate the deflection limiting operation. As an illustrative example, the damper 10 may be mounted as a tailgate damper on the inside of a tailgate of a motor vehicle. If the vehicle passes a pothole in the road, the wheels may suddenly go down into and up from the pothole, whereby the damper 10 may be subjected to relatively strong transient forces. Due to the inertia of the mass element 20, the mass element 20 will first move downwards in relation to the opening 35 as indicated by an arrow in Fig. 8A, and thereafter upwards as indicated by an arrow in Fig 8B. In this situation, and if the external transient forces are strong enough, the deflection limiting mechanism will operate. The deflection limiter 61 will first hit or strike against a lower part of the tubular portion 38b of the elastic damper element 30, as shown in Fig. 8A. Thereafter, as the mass element 20 tends to move upwards relative to elastic damper element 30, an upper part of the deflection limiter 61 will in the same way hit or strike against an upper part of the tubular portion 38b of the elastic component 32, as indicated by an arrow in Fig. 8B. This deflection limiting mechanism will prevent excessive transverse movement of the elastic component 32. It will be noted that the present embodiment makes it possible to implement a deflection limiting mechanism in a simple and cost-efficient manner during the assembly of the damper 10, without the need for any further specific deflection-limiting components or assembly operations.

The illustrated first embodiment presents a number advantages relating to the time and cost for the manufacture and assembly as discussed above. However, there are also substantial advantages with respect to tuning options. Fine-tuning may be done by varying one or more parameters of the elastic component 32, such as the material thereof, as well as the wall thickness, the length and/or the angle of the frusto-conical skirt 36. It may also be possible to tune the elastic component 32 by using a plurality of inclined legs instead of a continuous frusto-conical skirt. Larger tuning steps may be obtained by varying the weight of the mass element. The illustrated embodiment makes it possible to easily cut the starting material into mass elements 20 of suitable lengths for providing such larger tuning steps.

### 2^{nd} embodiment

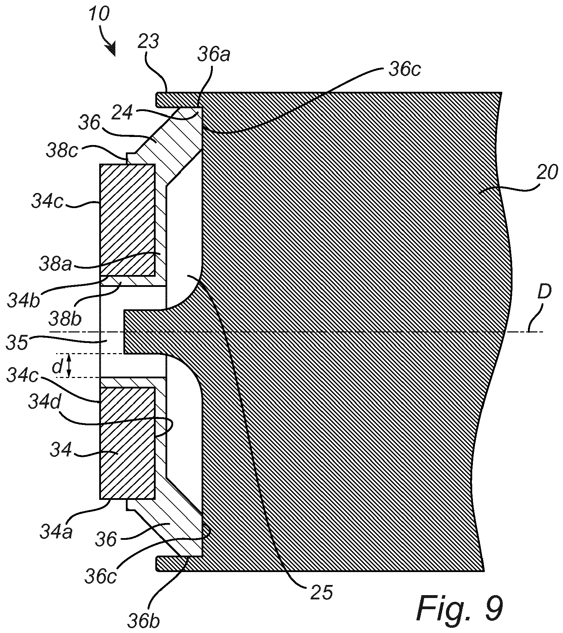

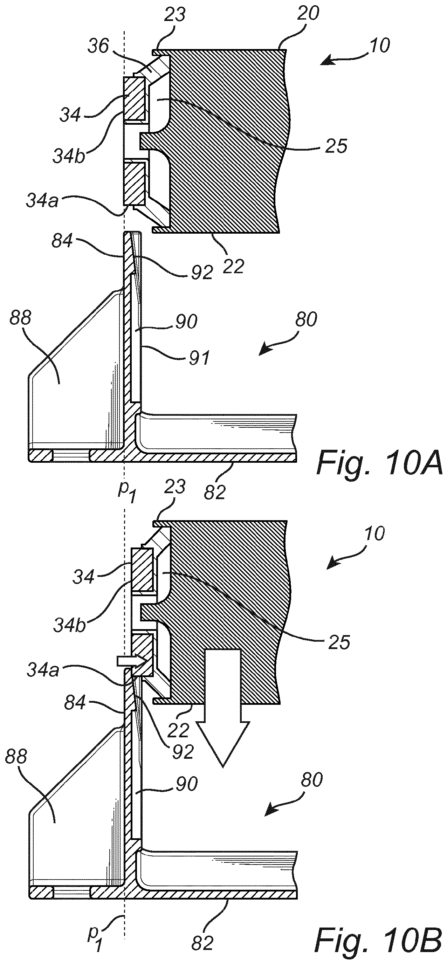

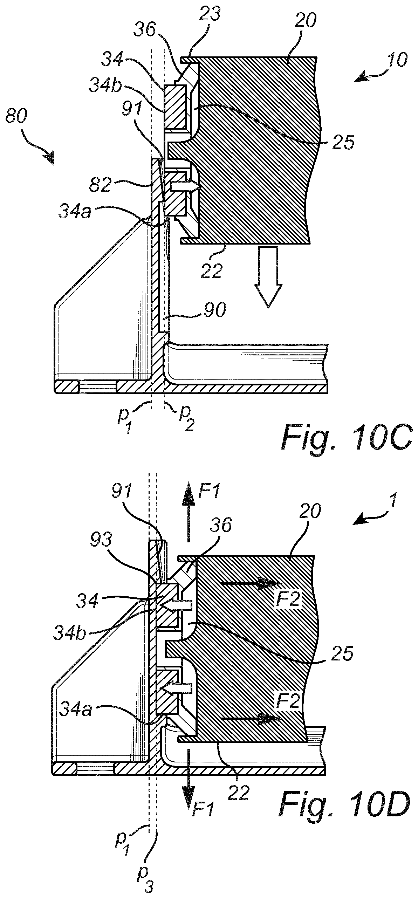

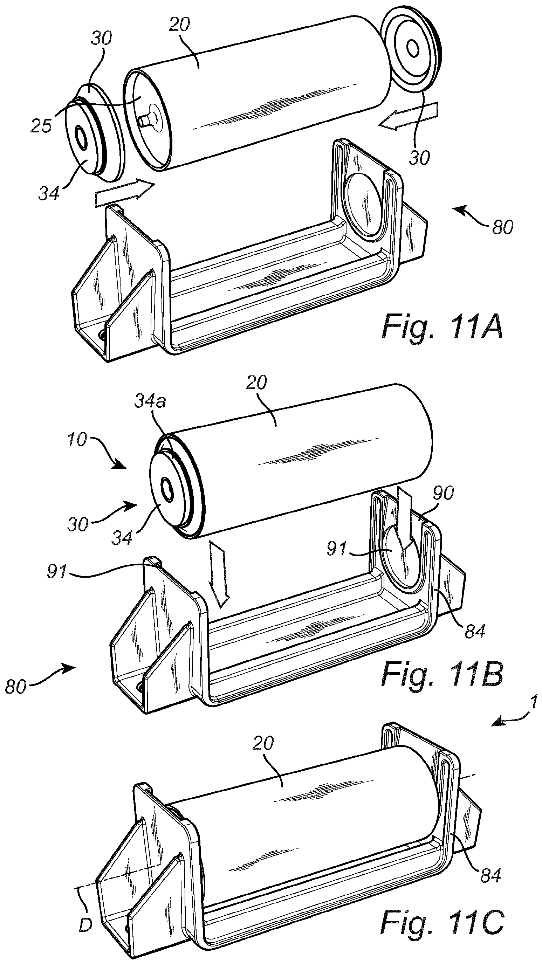

Figs 9, 10A to 10D, and 11A to 11C illustrate a second embodiment of a frequency tuned damper 10. The same reference numerals are used as in the first embodiment used except where the embodiments differ. The second embodiment illustrates that the inventive concept of using one or two snap-lock mechanisms as described above can be used also without any connector elements. Also, the concept of using the angled portion 36 of the elastic component 32 for providing a quick and efficient engagement of the elastic component 32 may be implemented without any intermediate connector elements 50. In the second embodiment, each end 22 of the mass element 20 is shaped essentially in accordance with the second engagement side 54 of the connector element 50 in the first embodiment. Thus, each end 22 of the mass element 20 has been provided with an inner cavity 25 which is defined by a sleeve 23 and which receives the elastic skirt 36. In all other aspects, the first and second embodiments are the same as to structure and operation.

### Alternative embodiments

The embodiments described above and as shown in the figures may be varied in many ways without departing from scope of the claims.

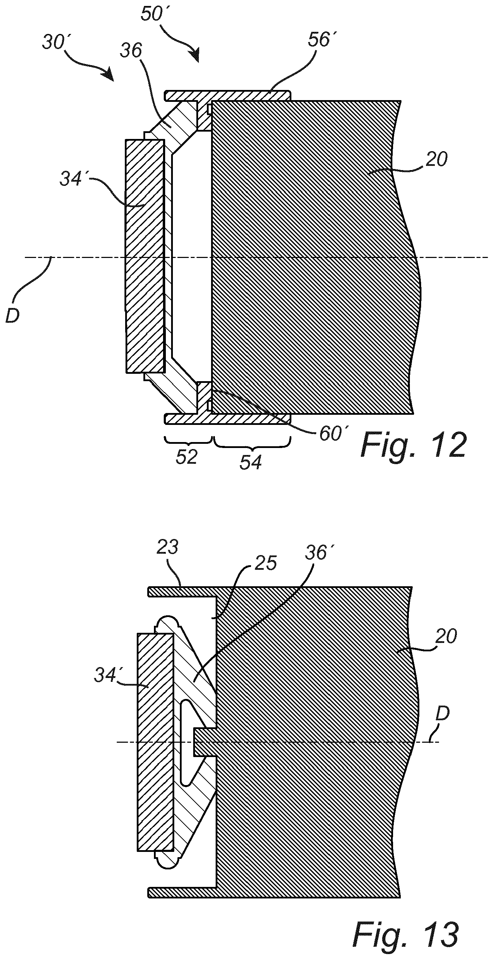

Fig. 12 discloses a variant of the first embodiment with a somewhat modified elastic damper element 30' and a somewhat modified connector element 50'. The modified elastic damper element 30' has no deflection-limiting mechanism. The rigid component of the damper element 30' is formed as a circular plate 34'. The connector element 50'differs in that the unbroken wall 60 in the first embodiment is replaced by a ring-shaped wall 60' engaging the end of the mass only around the outer periphery.

In the first embodiment, the angled portion of the elastic part 32 is in the form of a frusto-conical skirt having its wider end facing towards the mass element 20. As illustrated schematically in Fig. 13, it may be possible to have one or more angled portions 36' pointing inwards instead for engagement with one or more central parts as illustrated in Fig. 13, or a combination of outwardly and inwardly angled components. Also, the skirt 50 may in some embodiments be formed by a plurality of individual legs instead of one single part. Furthermore, it may be possible to bond the elastic material to the connector element 50 in some way, e.g. by adhesive, before the assembly of the damper is initiated. It may also be possible to obtain such a pre-engagement by using a skirt 36 which has to be somewhat radially compressed in order to fit into the second inner cavity 63.

## Claims

1. A frequency tuned damper assembly for dampening vibrations of a vibrating structure, said damper assembly comprising:
a damper (10) having a longitudinal direction and including at least two elastic damper elements (30) and at least one mass element (20), said mass element (20) extending in the longitudinal direction (D) between two opposite ends (22) thereof and being elastically supported at each one of said opposite ends (22) via an associated one of said two elastic damper elements (30), and said mass element (20) and said two elastic damper elements (30) together forming a spring-mass system which is frequency tuned to vibrations of the vibrating structure; and
a console (80) comprising two support portions (82), which are mutually spaced in the longitudinal direction (D) and which support the damper (10) therebetween;
wherein at least a first damper element (30) of the two elastic damper (30) elements forms part of a first snap-lock mechanism and is in a biased state by being elastically compressed in the longitudinal direction (D) for maintaining the first snap-lock mechanism in a locked state in which the mass element (20) is held in a locked mounted position, said first snap-lock mechanism in its locked state being arranged to prevent the mass element (20) from being disengaged from the console (80) in a transverse direction relative to the longitudinal direction (D); and
wherein said first snap-lock mechanism for assembling the damper assembly is arranged to allow, by an elastic compression in the longitudinal direction (D) of the first damper element (30), the mass element (20) to be brought into its locked mounted position.

2. The damper assembly according to claim 1, wherein:
the first damper element (30) comprises an elastic component (32) made from an elastic material and a locking component (34) made from a more rigid material than the elastic material;
the elastic component (32) forms part of the spring-mass system and is elastically compressed in the longitudinal direction (D) in the mounted position of the mass element (20); and
the locking component (34) forms a first locking part of the first snap-lock mechanism and is maintained by the compressed elastic component (32) in a locked engagement with a second locking part of the first snap-lock mechanism.

3. The damper assembly according to claim 2, wherein the first snap-lock mechanism is arranged at an interface between the first elastic damper element (30) and an associated first support portion (82) of said two support portions (82) of the console (80); and wherein the first support portion (82) of the console (80) is provided with the second locking part of the first snap-lock mechanism.

4. The damper assembly according to claim 3, wherein the elastic component (32) of the first damper element (30) comprises at least one angled engagement portion (36), which is arranged at an interface between the first elastic damper element (30) and the mass element (20) and which extends at an angle in relation to the longitudinal direction (D) and which is arranged to convert part of a longitudinal force generated by the longitudinally compressed elastic component into a transverse engagement force.

5. The damper assembly according to any of the preceding claims, wherein the first snap-lock mechanism is provided with co-operating guide surfaces (92) which structured and arranged, when assembling the damper assembly:
- to provide a gradually increasing compression of the first elastic damper element (30) in the longitudinal direction (D) for allowing the mass element (20) to be brought into its mounted position, and
- to subsequently allow the first elastic damper element (30) to expand to its biased state for bringing the first snap-lock mechanism to its locked state.

6. The damper assembly according to any of claims 2 to 5, wherein the locking component (34) is made at least partly from metal.

7. The damper assembly according to any of claims 2 to 5, wherein the elastic component (32) and the more rigid locking component (34) of the damper element (30) are in the form of a 2K element made by a 2K process.

8. The damper assembly according to any of the preceding claims, wherein:
a second elastic damper element (30) of said two elastic damper elements (30) forms part of a second snap-lock mechanism, said second snap-lock mechanism being configured according to the first snap-lock mechanism as defined in any of the preceding claims.

9. The damper assembly according to any of the preceding claims, further comprising two intermediate connector elements (50), each connector element (50) having a first engagement side in direct engagement with an associated one of the two opposite ends (22) of the mass element (20), and an opposite second engagement side in direct engagement with an associated one of the two elastic damper elements.

10. The damper according to claim 9, wherein each connector element (50) on its first engagement side presents a mass-engaging sleeve (56) into which the associated end (22) of the mass element (20) is inserted with a press-fit engagement.

11. A method for assembling a frequency tuned damper assembly, said method comprising:
bringing a mass element (20) into a mounted position between two supporting portions (82) of a console (80) by moving at least one of the mass element (20) and the console (80), in a transverse direction relative to a longitudinal direction (D) of the mass element (20), towards the other one of the mass element (20) and the console (80);
wherein the mass element (20) in its mounted position is elastically supported by the support portions (82) via two elastic damper elements (30) which are arranged at opposite ends (22) of the mass element (20); and
wherein at least a first elastic damper element (30) of said two elastic damper elements (30) forms part of a first snap lock mechanism and is being elastically compressed in the longitudinal direction (D) as a result of bringing the mass element (20) into said mounted position; and
as a result of bringing the mass element (20) into its mounted position, snap-locking at least a first end (22) of said two opposite ends (22) of the mass element (20) in the transverse direction by means of said er first snap-lock mechanism, in which the first elastic damper element (30) operates to bring the first snap-lock mechanism into a locked state, wherein in said locked state the first elastic damper element (30) is in a biased state by being elastically compressed in the longitudinal direction (D) to maintain the first snap-lock mechanism it its locked state.

12. The method according to claim 11, further comprising, as a result of bringing the mass element (20) into its mounted position, snap-locking a second end of the two opposite ends (22) of the mass element (20) in the transverse direction by means of a second snap-lock mechanism, in which a second elastic damper element (30) of said two elastic damper elements (30) operates to bring the second snap-lock mechanism into a locked state and to maintain the second snap-lock mechanism it its locked state by being compressed in the longitudinal direction (D).

13. The method according to claim 11 or 12, wherein:
- as a result of moving at least one of the mass element (20) and the console (80) in the transverse direction towards the other one of the mass element (20) and the console (80), gradually compressing the two elastic elements (30) in the longitudinal direction; and
- as a result of the mass element (20) reaching its mounted position, allowing the elastic damper elements (30) to expand in the longitudinal direction into a biased state.

## Patentansprüche

1. Frequenzabgestimmte Dämpferanordnung zum Dämpfen von Vibrationen einer vibrierenden Struktur, wobei die Dämpferanordnung umfasst:
einen Dämpfer (10), der eine Längsrichtung aufweist und mindestens zwei elastische Dämpfungselemente (30) und mindestens ein Masseelement (20) enthält, wobei sich das Masseelement (20) in der Längsrichtung (D) zwischen zwei entgegengesetzten Enden (22) desselben erstreckt und von jedem der beiden entgegengesetzten Enden (22) über ein Zugeordnetes der beiden elastischen Dämpfungselement (30) elastisch getragen wird, und wobei das Masseelement (20) und die beiden elastischen Dämpfungselemente (30) zusammen ein Feder-Masse-System bilden, das auf Vibrationen der vibrierenden Struktur frequenzabgestimmt ist; und
eine Konsole (80), die zwei Trägerabschnitte (82) umfasst, die in der Längsrichtung (D) gegenseitig voneinander beabstandet sind und die dazwischen den Dämpfer (10) tragen;
wobei mindestens ein erstes Dämpfungselement (30) der beiden elastischen Dämpfungselemente (30) einen Teil eines ersten Schnappverschlussmechanismus bildet und sich in einem vorgespannten Zustand befindet, indem es in der Längsrichtung (D) elastisch zusammengedrückt wird, um den ersten Schnappverschlussmechanismus in einem verriegelten Zustand zu halten, in dem das Masseelement (20) in einer verriegelten Montageposition gehalten wird, wobei der erste Schnappverschlussmechanismus in seinem verriegelten Zustand geeignet ist zum Verhindern, dass das Masseelement (20) in einer Querrichtung relativ zur Längsrichtung (D) von der Konsole (80) abgetrennt wird; und
wobei der erste Schnappverschlussmechanismus zum Zusammenbauen der Dämpferanordnung geeignet ist zum Erlauben, dass das Masseelement (20) durch ein elastisches Zusammendrücken in der Längsrichtung (D) des ersten Dämpfungselements (30) in seine verriegelte Montageposition gebracht wird.

2. Dämpferanordnung nach Anspruch 1, wobei:
das erste Dämpfungselement (30) umfasst eine elastische Komponente (32), die aus einem elastischen Material hergestellt ist, und eine Verriegelungskomponente (34) aus einem starreren Material als das elastische Material hergestellt ist;
wobei die elastische Komponente (32) einen Teil des Feder-Masse-Systems bildet und in der Montageposition des Masseelements (20) in der Längsrichtung (D) elastisch zusammengedrückt ist; und
wobei die Verriegelungskomponente (34) ein erstes Verriegelungsbauteil des ersten Schnappverschlussmechanismus bildet und durch die zusammengedrückte elastische Komponente (32) in einem verriegelten Eingriff mit einem zweiten Verriegelungsbauteil des ersten Schnappverschlussmechanismus gehalten wird.

3. Dämpferanordnung nach Anspruch 2, wobei der erste Schnappverschlussmechanismus an einer Grenzfläche zwischen dem ersten elastischen Dämpfungselement (30) und einem zugeordneten ersten Trägerabschnitt (82) der beiden Trägerabschnitte (82) der Konsole (80) angeordnet ist; und wobei der erste Trägerabschnitt (82) der Konsole (80) mit dem zweiten Verriegelungsbauteil des ersten Schnappverschlussmechanismus bereitgestellt wird.

4. Dämpferanordnung nach Anspruch 3, wobei die elastische Komponente (32) des ersten Dämpfungselements (30) mindestens einen angewinkelten Eingriffsabschnitt (36) umfasst, der an einer Grenzfläche zwischen dem ersten elastischen Dämpfungselement (30) und dem Masseelement (20) angeordnet ist und der sich in einem Winkel in Bezug auf die Längsrichtung (D) erstreckt und der geeignet ist, um einen Teil einer Längskraft, die durch die in Längsrichtung zusammengedrückte elastische Komponente erzeugt wird, in eine transversale Eingriffskraft umzuwandeln.

5. Dämpferanordnung nach einem der vorhergehenden Ansprüche, wobei der erste Schnappverschlussmechanismus mit kooperierenden Führungsflächen (92) bereitgestellt wird, die beim Zusammenbauen der Dämpferanordnung strukturiert und geeignet sind zum:
Bereitstellen eines allmählich zunehmenden Zusammendrückens des ersten elastischen Dämpfungselements (30) in der Längsrichtung (D), um zu erlauben, dass das Masseelement (20) in seine Montageposition gebracht wird, und
nachfolgenden Erlauben, dass sich das erste elastische Dämpfungselement (30) in seinen vorgespannten Zustand ausdehnt, um den ersten Schnappverschlussmechanismus in seinen verriegelten Zustand zu bringen.

6. Dämpferanordnung nach einem der Ansprüche 2 bis 5, wobei die Verriegelungskomponente (34) mindestens teilweise aus Metall hergestellt ist.

7. Dämpferanordnung nach einem der Ansprüche 2 bis 5, wobei die elastische Komponente (32) und die starrere Verriegelungskomponente (34) des Dämpfungselements (30) die Form eines 2K-Elements aufweisen, das durch einen 2K-Prozess hergestellt wird.

8. Dämpferanordnung nach einem der vorhergehenden Ansprüche, wobei:
ein zweites elastisches Dämpfungselement (30) der beiden elastischen Dämpfungselemente (30) einen Teil eines zweiten Schnappverschlussmechanismus bilden, wobei der zweite Schnappverschlussmechanismus gemäß dem ersten Schnappverschlussmechanismus konfiguriert ist, wie er in einem der vorhergehenden Ansprüche definiert wird.

9. Dämpferanordnung nach einem der vorhergehenden Ansprüche, die außerdem umfasst: zwei zwischengeschaltete Verbindungselemente (50), wobei jedes Verbindungselement (50) eine erste Eingriffsseite in einem direkten Eingriff mit einem Zugeordneten der beiden entgegengesetzten Enden (22) des Masseelements (20) und eine entgegengesetzte zweite Eingriffsseite in einem direkten Eingriff mit einem Zugeordneten der beiden Dämpfungselemente aufweist.

10. Dämpfer nach Anspruch 9, wobei jedes Verbindungselement (50) auf seiner ersten Eingriffsseite eine masseergreifende Hülse (56) aufweist, in die das zugeordnete Ende (22) des Masseelements (20) mit einem Presseingriff eingefügt wird.

11. Verfahren zum Zusammenbauen einer frequenzabgestimmten Dämpferanordnung, wobei das Verfahren umfasst:
Bringen eines Masseelements (20) in eine Montageposition zwischen zwei Trägerabschnitten (82) einer Konsole (80), indem mindestens Eines des Masseelements (20) und der Konsole (80) in einer Querrichtung relativ zu einer Längsrichtung (D) des Masseelements (20) in Richtung auf das Andere des Masseelements (20) und der Konsole (80) bewegt wird;
wobei das Masseelement (20) in seiner Montageposition von den zwei Trägerabschnitten (82) über zwei elastische Dämpfungselemente (30) elastisch getragen wird, die an entgegengesetzten Enden (22) des Masseelements (20) angeordnet sind; und
wobei mindestens ein erstes elastisches Dämpfungselement (30) der beiden elastischen Dämpfungselemente (30) einen Teil eines ersten Schnappverschlussmechanismus bildet und als ein Ergebnis des Bringens des Masseelements (20) in die Montageposition in der Längsrichtung (D) elastisch zusammengedrückt wird; und
als ein Ergebnis des Bringens des Masseelements (20) in seine Montageposition, Schnappverschließen mindestens eines ersten Endes (22) der beiden entgegengesetzten Enden (22) des Masseelements (20) in der Querrichtung mithilfe des ersten Schnappverschlussmechanismus, wobei das erste elastische Dämpfungselement (30) funktioniert, um den ersten Schnappverschlussmechanismus in einen verriegelten Zustand zu bringen, wobei sich das erste elastische Dämpfungselement (30) in seinem verriegelten Zustand in einem vorgespannten Zustand befindet, indem es in der Längsrichtung (D) elastisch zusammengedrückt wird, um den ersten Schnappverschlussmechanismus in seinem verriegelten Zustand zu halten.

12. Verfahren nach Anspruch 11, das außerdem umfasst:
als ein Ergebnis des Bringens des Masseelements (20) in seine Montageposition, Schnappverschließen eines zweiten Endes der beiden entgegengesetzten Enden (22) des Masseelements (20) in der Querrichtung mithilfe eines zweiten Schnappverschlussmechanismus, wobei ein zweites elastisches Dämpfungselement (30) der beiden elastischen Dämpfungselemente (30) funktioniert, um den zweiten Schnappverschlussmechanismus in einen verriegelten Zustand zu bringen und um den zweiten Schnappverschlussmechanismus in seinem verriegelten Zustand zu halten, indem er in der Längsrichtung (D) zusammengedrückt wird.

13. Verfahren nach Anspruch 11 oder 12, wobei:
als ein Ergebnis des Bewegens mindestens Eines des Masseelements (20) und der Konsole (80) in der Querrichtung in Richtung auf das Andere des Masseelements (20) und der Konsole (80) die beiden elastischen Elemente (30) in der Längsrichtung allmählich zusammengedrückt werden; und
als ein Ergebnis, dass das Masseelement (20) seine Montageposition erreicht, den elastischen Dämpfungselementen (30) erlaubt wird, sich in der Längsrichtung in einen vorgespannten Zustand auszudehnen.

## Revendications

1. Ensemble amortisseur accordé en fréquence destiné à amortir les vibrations d'une structure vibrante, ledit ensemble amortisseur comprenant :
un amortisseur (10) ayant une direction longitudinale et comprenant au moins deux éléments amortisseurs élastiques (30) et au moins un élément de masse (20), ledit élément de masse (20) s'étendant dans la direction longitudinale (D) entre deux extrémités opposées (22) de celui-ci et étant supporté élastiquement à chacune desdites extrémités opposées (22) par l'intermédiaire d'un élément associé desdits deux éléments amortisseurs élastiques (30), et ledit élément de masse (20) et lesdits deux éléments amortisseurs élastiques (30) formant ensemble un système ressort-masse qui est accordé en fréquence aux vibrations de la structure vibrante ; et
une console (80) comprenant deux parties de support (82), qui sont mutuellement espacées dans la direction longitudinale (D) et qui supportent l'amortisseur (10) entre ces dernières ;
au moins un premier élément amortisseur (30) des deux éléments amortisseurs élastique (30) faisant partie d'un premier mécanisme de verrouillage par encliquetage étant dans un état de sollicitation en étant comprimé élastiquement dans la direction longitudinale (D) pour maintenir le premier mécanisme de verrouillage par encliquetage et dans un état verrouillé dans lequel l'élément de masse (20) est maintenu dans une position montée de verrouillage, ledit premier mécanisme de verrouillage par encliquetage dans son état verrouillé étant agencé pour empêcher l'élément de masse (20) de se libérer de la console (80) dans une direction transversale par rapport à la direction longitudinale (D) ; et
ledit premier mécanisme de verrouillage par encliquetage pour l'assemblage de l'ensemble amortisseur étant agencé pour permettre, par une compression élastique dans la direction longitudinale (D) du premier élément amortisseur (30), à l'élément de masse (20) d'être amené dans sa position montée de verrouillage.

2. Ensemble amortisseur selon la revendication 1,
le premier élément amortisseur (30) comprenant un composant élastique (32) constitué d'un matériau élastique et d'un composant de verrouillage (34) constitué d'un matériau plus rigide que le matériau élastique ;
le composant élastique (32) faisant partie du système ressort-masse et étant comprimé élastiquement dans la direction longitudinale (D) dans la position montée de l'élément de masse (20) ; et
le composant de verrouillage (34) formant une première partie de verrouillage du premier mécanisme de verrouillage par encliquetage et étant maintenu par l'élément élastique comprimé (32) dans une prise verrouillée avec une seconde partie de verrouillage du premier mécanisme de verrouillage par encliquetage.

3. Ensemble amortisseur selon la revendication 2, le premier mécanisme de verrouillage par encliquetage étant agencé au niveau d'une interface entre le premier élément amortisseur élastique (30) et une première partie de support associée (82) desdites deux parties de support (82) de la console (80) ; et la première partie de support (82) de la console (80) étant pourvue de la seconde partie de verrouillage du premier mécanisme de verrouillage par encliquetage.

4. Ensemble amortisseur selon la revendication 3, le composant élastique (32) du premier élément amortisseur (30) comprenant au moins une partie de mise en prise oblique (36), qui est agencée au niveau d'une interface entre le premier élément amortisseur élastique (30) et l'élément de masse (20) et qui s'étend selon un angle par rapport à la direction longitudinale (D) et qui est agencée pour convertir une partie d'une force longitudinale générée par le composant élastique comprimé longitudinalement en une force de mise en prise transversale.

5. Ensemble amortisseur selon l'une quelconque des revendications précédentes, le premier mécanisme de verrouillage par encliquetage étant pourvu de surfaces de guidage coopérantes (92) qui sont structurées et agencées, lors de l'assemblage de l'ensemble amortisseur :
- pour fournir une compression progressivement croissante du premier élément amortisseur élastique (30) dans la direction longitudinale (D) pour permettre à l'élément de masse (20) d'être amené dans sa position montée, et
- pour permettre ensuite au premier élément amortisseur élastique (30) de se dilater jusqu'à son état de sollicitation pour amener le premier mécanisme de verrouillage par encliquetage à son état verrouillé.

6. Ensemble amortisseur selon l'une quelconque des revendications 2 à 5, le composant de verrouillage (34) étant constitué au moins partiellement de métal.

7. Ensemble amortisseur selon l'une quelconque des revendications 2 à 5, le composant élastique (32) et le composant de verrouillage plus rigide (34) de l'élément amortisseur (30) étant sous la forme d'un élément 2K fabriqué par un procédé 2K.

8. Ensemble amortisseur selon l'une quelconque des revendications précédentes,
un second élément amortisseur élastique (30) desdits deux éléments amortisseurs élastique (30) faisant partie d'un second mécanisme de verrouillage par encliquetage, ledit second mécanisme de verrouillage par encliquetage étant configuré conformément au premier mécanisme de verrouillage par encliquetage tel que défini selon l'une quelconque des revendications précédentes.

9. Ensemble amortisseur selon l'une quelconque des revendications précédentes, comprenant en outre deux éléments de liaison intermédiaires (50), chaque élément de liaison (50) ayant un premier côté de mise en prise venant en prise directe avec une extrémité associée des deux extrémités opposées (22) de l'élément de masse (20), et un second côté de mise en prise opposé venant en prise directe avec un élément associé des deux éléments amortisseurs élastiques.

10. Amortisseur selon la revendication 9, chaque élément de liaison (50) sur son premier côté de mise en prise présentant un manchon de mise en prise de masse (56) dans lequel l'extrémité associée (22) de l'élément de masse (20) est insérée avec une mise en prise par ajustement serré.

11. Procédé d'assemblage d'un ensemble amortisseur accordé en fréquence, ledit procédé comprenant :
le fait d'amener un élément de masse (20) dans une position montée entre deux parties de support (82) d'une console (80) en déplaçant au moins l'un de l'élément de masse (20) et de la console (80), dans une direction transversale par rapport à une direction longitudinale (D) de l'élément de masse (20), vers l'autre de l'élément de masse (20) et de la console (80) ;
l'élément de masse (20), dans sa position montée, étant soutenu élastiquement par les parties de support (82) par l'intermédiaire de deux éléments amortisseurs élastiques (30) qui sont agencés aux extrémités opposées (22) de l'élément de masse (20) ; et
au moins un premier élément amortisseur élastique (30) desdits deux éléments amortisseurs élastiques (30) faisant partie d'un premier mécanisme de verrouillage par encliquetage et étant comprimé élastiquement dans la direction longitudinale (D) en conséquence du fait d'amener l'élément de masse (20) dans ladite position montée ; et en conséquence du fait d'amener l'élément de masse (20) dans sa position montée, le verrouillage par encliquetage d'au moins une première extrémité (22) desdites deux extrémités opposées (22) de l'élément de masse (20) dans la direction transversale au moyen dudit premier mécanisme de verrouillage par encliquetage, dans lequel le premier élément amortisseur élastique (30) fonctionne pour amener le premier mécanisme de verrouillage par encliquetage dans un état verrouillé, dans ledit état verrouillé, le premier élément amortisseur élastique (30) étant dans un état de sollicitation en étant comprimé élastiquement dans la direction longitudinale (D) pour maintenir le premier mécanisme de verrouillage par encliquetage dans son état verrouillé.

12. Procédé selon la revendication 11, comprenant en outre, en conséquence d'amener l'élément de masse (20) dans sa position montée, le verrouillage par encliquetage d'une seconde extrémité des deux extrémités opposées (22) de l'élément de masse (20) dans la direction transversale au moyen d'un second mécanisme de verrouillage par encliquetage, dans lequel un second élément amortisseur élastique (30) desdits deux éléments amortisseurs élastiques (30) fonctionne pour amener le second mécanisme de verrouillage par encliquetage dans un état verrouillé et pour maintenir le second mécanisme de verrouillage par encliquetage dans son état verrouillé en étant comprimé dans la direction longitudinale (D).

13. Procédé selon la revendication 11 ou 12,
- avec comme conséquence du déplacement d'au moins l'un de l'élément de masse (20) et de la console (80) dans la direction transversale vers l'autre de l'élément de masse (20) et de la console (80), la compression progressive des deux éléments élastiques (30) dans la direction longitudinale ; et
- avec comme conséquence du fait que l'élément de masse (20) atteint sa position montée, le fait de permettre aux éléments amortisseurs élastiques (30) de se dilater dans la direction longitudinale dans un état de sollicitation.
